Europäisches Patentamt

(19) European Patent Office

Office européen des brevets

(11) Veröffentlichungsnummer: **0 052 776**
**B1**

(12) **EUROPÄISCHE PATENTSCHRIFT**

(45) Veröffentlichungstag der Patentschrift:
12.12.84

(51) Int. Cl.³: **B 05 D 5/06**, B 05 D 1/36,
C 09 D 5/38

(21) Anmeldenummer: 81108797.2

(22) Anmeldetag: 23.10.81

(54) **Zweischicht-Metallic-Lackierung und Verfahren zu ihrer Herstellung.**

(30) Priorität: 05.11.80 DE 3041648

(43) Veröffentlichungstag der Anmeldung:
02.06.82 Patentblatt 82/22

(45) Bekanntmachung des Hinweises auf die Patenterteilung:
12.12.84 Patentblatt 84/50

(84) Benannte Vertragsstaaten:
AT BE CH DE FR GB IT LI NL SE

(56) Entgegenhaltungen:
FR - A - 2 019 172

(73) Patentinhaber: BASF Farben + Fasern
Aktiengesellschaft, Am Neumarkt 30,
D-2000 Hamburg 70 (DE)

(72) Erfinder: Drexler, Hermann-Josef, Dr. Dipl.-Chem.,
Bergstrasse 23, D-8702 Guntersleben (DE)
Erfinder: Poth, Ulrich, Albachtener Strasse 53,
D-4400 Münster (DE)

(74) Vertreter: Habbel, Hans-Georg, Dipl.-Ing.,
Postfach 3429 Am Kanonengraben 11, D-4400 Münster
(DE)

## Beschreibung

Die Erfindung betrifft eine Zweischicht-Metallic-Lackierung, bestehend aus einer Metallpigmente enthaltenden Basisschicht und einem Klarlacküberzug, wobei mindestens die Basisschicht aus einem Überzugsmittel erhalten wurde, das als filmbildendes Bindemittel ein Polymerisatharz enthält, das durch Copolymerisation von olefinisch ungesättigten Verbindungen erhalten wurde, und ein Verfahren zu ihrer Herstellung.

Aus der DE-OS 1 949 372 ist eine Zweischicht-Metallic-Lackierung bekannt, bei der die Basisschicht aus einem Anteil Celluloseester besteht, der mit einem linearen oder verzweigten gesättigten Polyester oder mit einem Hydroxyl- und gegebenenfalls auch Carboxylgruppen enthaltenden Acrylatharz plastifiziert ist. Durch einen weiteren Anteil eines Aminoharzes erfolgt beim Einbrennprozeß eine Vernetzung. Die Basisschicht enthält weiterhin den metallischen Effekt erzeugende Metall-, vorzugsweise Aluminiumteilchen und gegebenenfalls ein färbendes Pigment.

Der Klarlacküberzug besteht aus Alkydharzen, gesättigten Polyestern oder Hydroxylgruppen enthaltenden Polyacrylatharzen oder deren Mischungen, die mit Aminoharzen, vorzugsweise Melaminharzen, vernetzt werden.

Diese bekannte Zweischicht-Metallic-Lackierung zeichnet sich durch einen sehr hohen metallischen Effekt aus, der durch eine besondere Orientierung der Aluminiumteilchen erzeugt wird.

Sie weist weiterhin gute mechanische Eigenschaften und eine hohe Witterungsbeständigkeit auf.

Zweischicht-Metallic-Lackierungen werden üblicherweise derart hergestellt, daß der die Metallpigmente enthaltende Basislack auf ein Substrat aufgebracht wird und danach naß-in-naß der Klarlacküberzug aufgebracht wird. Sodann werden die Basisschicht und der Klarlacküberzug gemeinsam eingebrannt.

Der Auftrag der Basisschicht und des Klarlacküberzuges erfolgt üblicherweise durch Spritzen. Nachteilig hat der aus der oben genannten DE-OS 1 949 372 bekannte Basislack im Verarbeitungszustand, d. h. bei einer Auslaufzeit von 14—18 Sekunden im DIN-Becher 4 (DIN 53 211) nur einen Festkörper von 10—15 Gew.-%. Dementsprechend gibt die Basisschicht sehr viel organisches Lösungsmittel ab. Aus wirtschaftlichen Gründen und aus Gründen des Umweltschutzes ist man bemüht, den Festkörpergehalt von für Zweischicht-Metallic-Lackierungen verwendeten Basislacken erheblich anzuheben und dadurch die Emission von organischen Lösungsmitteln herabzusetzen. Diese Bemühungen waren bisher erfolglos, da mit einer Anhebung des Festkörpergehaltes stets eine erhebliche Verschlechterung des metallischen Effekts der Lackierung verbunden war.

Es ist Aufgabe der Erfindung, diese Nachteile des Standes der Technik zu vermeiden und eine Zweischicht-Metallic-Lackierung zu schaffen, die einerseits die gewünschte Orientierung der Metallpigmente in der Basisschicht und damit einen hervorragenden metallischen Effekt aufweist und bei deren Herstellung andererseits durch Anhebung des Festkörpergehaltes des Basislacks eine erheblich verringerte Emission von organischen Lösungsmitteln auftritt. Die Zweischicht-Metallic-Lackierung soll weiterhin gute mechanische Eigenschaften und eine hohe Witterungsbeständigkeit aufweisen.

Diese Aufgabe wird bei einer Zweischicht-Metallic-Lackierung der eingangs genannten Art erfindungsgemäß dadurch gelöst, daß das Polymerisatharz durch Copolymerisation von

| a) | 1,0 bis 50,0 Gew.-% | Acrylnitril und/oder Methacrylnitril, |
|---|---|---|
| b) | 0,1 bis 10,0 Gew.-% | einer Verbindung mit 2 oder mehr polymerisierbaren olefinischen Doppelbindungen und |
| c) | 40,0 bis 98,9 Gew.-% | anderen copolymerisierbaren Verbindungen erhalten wurde, wobei die Gesamtmenge der Bestandteile a, b und c 100 Gew.-% beträgt. |

Eine vorteilhafte Ausgestaltung der Erfindung ist dadurch gekennzeichnet, daß das Polymerisatharz durch Copolymerisation von

| a) | 3,0 bis 30,0 Gew.-% | Acrylnitril und/oder Methacrylnitril, |
|---|---|---|
| b) | 1,0 bis 7,0 Gew.-% | einer Verbindung mit 2 oder mehr polymerisierbaren olefinischen Doppelbindungen und |
| c) | 63,0 bis 96,0 Gew.-% | anderen copolymerisierbaren Verbindungen erhalten wurde, wobei die Gesamtmenge der Bestandteile a, b und c 100 Gew.-% beträgt. |

Beispiele für den Bestandteil b sind Divinylbenzol, Glykoldivinylether, Adipinsäuredivinylester, Allylvinylether, Diallylfumarat, Triallylcyanurat und ähnliche Verbindungen. Auch niedermolekulare Präpolymerisate dieser Verbindungen können eingesetzt werden.

Besonders vorteilhaft werden als Bestandteil b Di-, Tri- oder Tetraacrylate von 2-, 3- bzw. 4-wertigen Alkoholen verwendet. Beispiele für derartige mehrfunktionelle Acrylat- und Methacrylatmonomere sind

Ethylenglycol-diacrylat, 2-Ethylpropandiol-1,3-diacrylat, 1,3-Butandiol-diacrylat,
1,4-Butandiol-diacrylat, Neopentylglykol-diacrylat, 3-Methylpentandiol-diacrylat,
1,6-Hexandiol-diacrylat, Diethylenglycol-diacrylat, Triethylenglycol-diacrylat,

2

Tetraethylenglykol-diacrylat, Tripropylenglykol-diacrylat, Polyethylenglykol-200-diacrylat, Polyethylenglykol-400-diacrylat, Diacrylate von Bisphenol-A-Derivaten, Diacrylat von ethoxyliertem Bisphenol A, Diacrylate von Amiden, Trimethylolpropan-triacrylat, tetraoxethyliertes Trimethylolpropan-triacrylat, Pentaerythrit-triacrylat, Melamin-triacrylat, Triacrylat von (Tris-2-hydroxyethyl)-isocyanat, Pentaerythrit-tetraacrylat, Ethylenglykol-dimethacrylat, 1,3-Butandiol-dimethacrylat, 1,4-Butandiol-dimethacrylat, Neopentylglykol-dimethacrylat, 1,6-Hexandiol-dimethacrylat, Diethylenglykol-dimethacrylat, Triethylenglykol-dimethacrylat, Tetraethylenglykol-dimethacrylat, Polyethylenglykol-dimethacrylat, Polyethylenglykol-600-dimethacrylat, Dimethacrylat von ethoxyliertem Bisphenol A, Trimethylolethan-trimethacrylat, Trimethylolpropan-trimethacrylat, Trimethacrylat von (Tris-2-hydroxyethyl)-isocyanurat.

Als Bestandteil c werden vorteilhaft Verbindungen verwendet, die aus folgender Gruppe ausgewählt wurden: Acrylsäure, Methacrylsäure, Crotonsäure, Ester dieser Säuren, Amide dieser Säuren und deren Methylolderivate, Styrol und andere vinylgruppenhaltige Verbindungen. Auch hier können niedermolekulare Präpolymerisate dieser Monomeren eingesetzt werden.

Beispiele für geeignete Monomere sind

Methyl-, Ethyl-, n-Propyl-, i-Propyl-, n-Butyl-, i-Butyl-, t-Butyl-, n-Pentyl-, Neopentyl-, n-Hexyl-, Cyclohexyl-, n-Octyl-, 2-Ethylhexyl-, 2-Hydroxyethyl-, Hydroxypropyl-, 2-Methoxyethyl- und Dimethylaminoethylacrylat bzw. -Methacrylat. Weitere geeignete Monomere sind Acrylamid, Methacrylamid, N-Methacrylamid, N-Methylmethacrylamid, N-Methylolacrylamid und N-Methylolmethacrylamid.

Ferner sind Vinyltoluol, $\alpha$-Methyl-Styrol, Vinylacetat und ähnliche Verbindungen geeignete Monomere für die Copolymerisation.

Das Überzugsmittel für die Basisschicht enthält vorteilhaft zusätzlich zu den Bestandteilen a, b und c als Bestandteil d bis zu 5 Gew.-% eines Celluloseesters, wobei die Gesamtmenge der Bestandteile a, b, c und d 100 Gew.-% beträgt. Beispiele hierfür sind Cellulosenitrat, Celluloseacetat, Cellulosepropionat, Cellulosebutyrat, Celluloseacetopropionat und Mischungen derselben. Besonders bevorzugt wird Celluloseacetobutyrat.

Vorteilhaft enthalten das Polymerisatharz vernetzbare Hydroxylgruppen und das Überzugsmittel für die Basisschicht zusätzlich ein die Hydroxylgruppen vernetzendes Vernetzungsmittel. Das Vernetzungsmittel kann ein Aminoplastharz, ein blockiertes Polyisocyanat und/oder ein Phenoplastharz sein.

Als Aminoplastharze bildende Verbindungen kommen Harnstoffe und seine Substitutionsprodukte, ferner Aminotriazine, die mindestens 2 Aminogruppen enthalten, wie Melamin, Ammelin, sowie Thioammelin und Benzoguanamin zur Anwendung.

Die Aminoplastharze werden durch Kondensation mit einem Aldehyd hergestellt. Der gebräuchlichste Aldehyd ist Formaldehyd. Die entstehenden Kondensationsprodukte weisen Methylolgruppen auf. Von diesen kann ein Teil mit einem einwertigen und/oder mehrwertigen Alkohol verethert werden. Geeignete Alkohole sind beispielsweise Methanol, Ethanol, Propanol, Isopropanol, Butanol, Allylalkohol, Glykol, Diglykol, Poloyglykol, Glycerin, Pentaerytrit, Sorbit oder Mannit.

Als blockiertes Polyisocyanat kann ein beliebiges Polyisocyanat verwendet werden, bei dem die Isocyanatgruppen mit einer Verbindung in der Weise umgesetzt worden sind, daß das gebildete verkappte Polyisocyanat gegenüber Hydroxyl- oder Aminogruppen bei Raumtemperatur beständig ist, mit diesen Gruppen aber bei erhöhten Temperaturen reagiert. Geeignet sind z. B. Diisocyanate, wie Toluylendiisocyanate, Xylylendiisocyanate, Trimethylendiisocyanat, Tetramethylendiisocyanat, Hexamethylendiisocyanat oder Diphenylmethandiisocyanat bzw. dessen vollständig oder partiell hydrierte Produkte mit Alkoholen, Polyolen oder Polyetherpolyolen, 1,4-Cyclohexan- und 1,2 Cyclohexandiisocyanat, m-Phenylendiisocyanat, 1,4-Naphthalindiisocyanat, 4,4-Diphenylenmethandiisocyanat. Als Blokierungsmittel kommen aliphatische, cycloaliphatische oder alkylaromatische Alkohole oder Phenolverbindungen in Frage, die geradkettig, verzweigt oder ringförmig vorliegen können, wie z. B. Methanol, Ethanol, n-, iso- oder tert.-Butanol, Hexanol, Ethylhexanol, Nonylalkohol, Furfurylalkohol, Phenylcarbinol, Cyclohexanol, Alkylglykole, Alkyldiglykole und Alkyltriglykole. Aber auch andere bekannte Blockierungsmittel, wie Lactame, Ketoxime Acetessigester oder Malonester können verwendet werden, ferner Phenolverbindungen, wie Phenol selbst, substituierte Phenole, deren Substituenten die Beschichtung nicht nachteilig beeinflussen, wie Kresol und Xylenol. Falls gewünscht, können geringe Mengen auch von höher molekularen, relativ schwer flüchtigen Monoalkoholen verwendet werden, die als Weichmacher in den Beschichtungen dienen. Weitere Verkappungsmittel sind tertiäre Hydroxylamine, wie Diethylethanolamin und Oxime, wie Methylethylketonoxim, Acetonoxim und Cyclohexanonoxim. Die Verwendung von Oximen und Phenolen ist besonders vorteilhaft, da spezifische Polyisocyanate, die mit diesen Verkappungsmitteln blockiert worden sind, bei relativ niedriger Temperatur wieder frei werden, ohne daß die Notwendigkeit besteht, einen Katalysator für die Urethanbildung, wie z. B. einen Zinnkatalysator, zuzugeben.

Das Additionsprodukt aus dem organischen Polyisocyanat und dem Verkappungsmittel bildet sich, indem man eine ausreichende Menge des Verkappungsmittels mit dem organischen Polyisocyanat umsetzt und dabei darauf achtet, daß keine freien Isocyanatgruppen übrig bleiben.

Die verkappten Isocyanatgruppen sind bei Raumtemperatur und auch bei leicht erhöhter Temperatur gegen Amino- und insbesondere gegen Hydroxylgruppen beständig, sie reagieren erst bei Temperaturen oberhalb 100°C.

Unter Phenolplastharzen werden Kondensationsprodukte aus Phenol und dessen Homologen, wie Kresolen, Xylenolen sowie Alkylphenolen, wie z. B. p-tert-Butylphenol, einerseits und Formaldehyd andererseits verstanden.

Die Erfindung betrifft ferner ein Verfahren zur Herstellung einer Zweischicht-Metallic-Lackierung, bestehend aus einer Basisschicht und einem Klarlacküberzug, durch Aufbringen eines Metallpigmente enthaltenden Überzugsmittels und eines Klarlacks und anschließendes Einbrennen.

Das Verfahren ist dadurch gekennzeichnet, daß zur Herstellung des Bindemittels des Überzugsmittels für die Basisschicht die Strukturbausteine

| a) | 1,0 bis 50,0 Gew.-% | Acrylnitril und/oder Methacrylnitril, |
|---|---|---|
| b) | 0,1 bis 10,0 Gew.-% | einer Verbindung mit 2 oder mehr polymerisierbaren olefinischen Doppelbindungen und |
| c) | 40,0 bis 98,9 Gew.-% | aderer copolymerisierbarer Verbindungen copolymerisiert werden, wobei die Gesamtmenge der Bestandteile a, b und c 100 Gew.-% beträgt und das so erhaltene Polymerisatharz zusammen mit Metallpigmenten, organischen Lösungsmitteln, gegebenenfalls färbenden Pigmenten und bekannten Hilfsmitteln durch dispergieren zu einem Überzugsmittel verarbeitet wird. |

Für den Fall, daß das Polymerisatharz vernetzbare Hydroxylgruppen enthält, kann dem Überzugsmittel für die Basisschicht vor oder während des Aufbringens vorteilhaft ein Polyisocyanat beigemischt werden. In diesem Fall handelt es sich bei dem Überzugsmittel für die Basisschicht um ein sogenanntes Zweikomponentenmaterial.

Vorteilhaft werden zunächst das Überzugsmittel für die Basisschicht und dann der Klarlacküberzug naß-in-naß aufgebracht und beide Schichten gemeinsam eingebrannt.

Weitere vorteilhafte Ausgestaltungen des erfindungsgemäßen Verfahrens ergeben sich aus den Unteransprüchen 11 bis 18.

Die Erfindung betrifft weiterhin die Verwendung eines Metallpigmente enthaltenden Überzugsmittels, das als filmbildendes Bindemittel ein Polymerisatharz enthält, das durch Copolymerisation von olefinisch ungesättigten Verbindungen erhalten wurde, für die Basisschicht einer Zweischicht-Metallic-Lackierung, die als obere Deckschicht einen Klarlacküberzug aufweist. Die erfindungsgemäße Verwendung ist dadurch gekennzeichnet, daß das Polymerisatharz durch Copolymerisation von

| a) | 1,0 bis 50,0 Gew.-% | einer Acrylnitril und/oder Methacrylnitril, |
|---|---|---|
| b) | 0,1 bis 10,0 Gew.-% | einer Verbindung mit 2 oder mehr polymerisierbaren olefinischen Doppelbindungen und |
| c) | 40,0 bis 98,9 Gew.-% | anderen copolymerisierbaren Verbindungen erhalten wurde, wobei die Gesamtmenge der Bestandteile a, b und c 100 Gew.-% beträgt. |

Vorteilhafte Ausgestaltungen der erfindungsgemäßen Verwendung ergeben sich aus den Unteransprüchen 22 bis 29.

Unter Verwendung der beschriebenen Bindemittel wird zusammen mit einem Metallpigment und gegebenenfalls färbenden Pigmenten, sowie organischen Lösungsmitteln und üblichen Hilfsstoffen, wie z. B. Füllstoffen, Verlaufmitteln und viskositätssteuernden Mitteln, durch die in der Lackindustrie bekannten Verfahren und mittels der bekannten Aggregate ein Lack für die Basisschicht einer Zweischicht-Metallic-Lackierung hergestellt. Als Material für den Klarlacküberzug ist jeder üblicherweise für Zweischicht-Metallic-Lackierungen verwendete Klarlack geeignet, wie er z. B. bei der Erstlackierung mit Einbrenntemperaturen zwischen 100 und 150°C, bei der Reparaturlackierung zwischen 60 und 110°C und bei raumtemperaturtrocknenden Reparaturlackierungen eingesetzt wird, d. h. der erfindungsgemäße Basislack ist für alle üblicherweise bei Zweischicht-Metallic-Lackierungen verwendeten Trocknungstemperaturen geeignet. Diese Klarlacke sind nicht Gegenstand der Erfindung und brauchen daher nicht näher erläutert zu werden.

Es hat sich nun gezeigt, daß die für die Herstellung der erfindungsgemäßen Zweischicht-Metallic-Lackierung verwendeten Basislacke im Verarbeitungszustand, d. h. bei einer Auslaufzeit von 14—18 Sekunden im DIN-Becher 4 (DIN 53 211) einen Bindemittelanteil von 22—35 Gew.-% aufweisen. Dies bedeutet gegenüber den bisher verwendeten Basislacken mit einem Gewichtsfestkörper von 8—15% eine erhebliche Reduzierung des Anteils an organischen Lösungsmitteln, die beim Spritzen, in der Abdunstzone und beim Einbrennen emittiert werden. Beispielsweise werden bei der Herstellung einer Basisschicht von 10—15 μm Trockenfilmdicke nur noch etwa 50% der Menge an organischen Lösungsmitteln emittiert, die bei den bisher verarbeiteten Systemen freigesetzt werden. Die Zweischicht-Metallic-Lackierung gemäß der Erfindung weist dabei einen hervorragenden metallischen Effekt auf.

Im folgenden wird die Erfindung anhand von Beispielen näher erläutert.

4

## Beispiel 1

Herstellung eines Acrylatharzes als Bindemittel für die Basisschicht einer Zweischicht-Metallic-Lakkierung.

In einen 2-Liter-Vierhalsrundkolben mit Rührer, Thermometer, Stickstoffeinleitungrohr, elektrischer Widerstandsheizung, Rückflußkühler und zwei Tropftrichtern werden 428 g Xylol, und 118 g n-Butanol eingewogen und bis zum Rückfluß erhitzt. 212 g Methylmethacrylat, 209 g n-Butylmethacrylat, 59 g Acrylnitril, 88 g 2-Hydroxypropylacrylat, 12 g Hexandiol-1,6-Diacrylat und 9 g Acrylsäure werden in den ersten Tropftrichter eingewogen und gemischt. 21 g t-Butylperbenzoat (gelöst in 44 g Xylol) werden in den zweiten Tropftrichter eingefüllt. Die Inhalte der beiden Tropftrichter werden innerhalb von 4 Stunden und Beibehalten der Rückflußtemperatur gleichzeitig und gleichmäßig zudosiert. Danach wird eine weitere Stunde die Rückflußtemperatur beibehalten. Es resultiert eine Polymerenlösung mit einem Gewichtsfestkörper von 50% und einer Säurezahl von 12. Die Viskositätsbestimmung einer mit Butanol auf 40 Gew.-% verdünnten Lösung mittels eines ICI-Viskosimeters (Platte/Kegel) ergab eine Viskosität von 270 mPas.

## Beispiel 2

Herstellung eines Acrylatharzes als Bindemittel für die Basisschicht einer Zweischicht-Metallic-Lakkierung.

In der gleichen Apparatur wie beim Beispiel 1 wurde nach gleicher Verfahrensweise ein weiteres Harz hergestellt. Es wurden 530 g Butylacetat vorgelegt. Der Tropftrichter 1 enthielt: 178 g Methylmethacrylat, 178 g n-Butylmethacrylat, 116 g Ethylacrylat, 41 g Acrylnitril, 47 g 2-Hydroxyethylacrylat, 18 g 2,2-Dimethylpropandiol-1,3-Dimethacrylat und 15 g Methhacrylsäure. Der Tropftrichter 2 enthielt eine Suspension von 15 g Azoisobuttersäuredinitril in 63 g Butylacetat. Es ergab sich eine Polymerenlösung mit einem Gewichtsfestkörper von 50%. Die Säurezahl betrug 10 und die Viskosität einer 40%igen Lösung in Butylacetat betrug 300 mPas.

## Beispiel 3

Herstellung eines Acrylatharzes als Bindemittel für die Basisschicht einer Zweischicht-Metallic-Lakkierung.

In der gleichen Apparatur wie im Beispiel 1 und 2 wurde nach dem gleichen Verfahren ein weiteres Harz hergestellt.

Es wurden 437 g Butylacetat, 117 g n-Butanol und 6 g t-Dodecylmercaptan vorgelegt. Der Tropftrichter 1 enthielt 84 Methylmethacrylat, 233 g n-Butylmethacrylat, 58 g Styrol, 87 g Methacrylnitril, 105 g 2-Hydroxypropylmethacrylat, 9 g Trimethylolpropantriacrylat und 6 g Acrylsäure. Der Tropftrichter 2 enthielt 23 g t-Butylperbenzoat in 29 g n-Butylacetat.

## Beispiel 4

### Herstellung eines Basislacks

150 g einer 6%igen Dispersion eines modifizierten Polyethylenwachses in Butylacetat wurden vorgelegt. Es wurden unter Rühren 300 g Acrylatharzlösung des Beispiels 1, 240 g einer Lösung eines teilbutanolveretherten mittelreaktiven Melaminharzes (50%ig in n-Butanol), 2 g einer 10%igen Lösung eines Polyphenylmethylsiloxans in Xylol, 25 g n-Butylglycolacetat, 30 g Ethylglycolacetat und 80 g n-Butylacetat. 75 g einer 66%igen Paste eines oberflächenbehandelten Aluminium-Pulvers in hochsiedendem aliphatischen Lösungsmittel wurden in 98 g Butylacetat gründlich aufgeschlemmt und zur oben genannten Mischung gegeben. Es resultierte ein Metallic-Basis-Lack mit einem Gewichtsfestkörper von 34% und einer Auslaufzeit von 30 Sekunden im DIN-Becher 4. Dieser Basislack wurde mit 300 g eines Lösungsmittelgemisches aus 80 Teilen Xylol und 20 Teilen n-Butylacetat auf Verarbeitungskonsistenz eingestellt. Er hatte dann einen Festkörper von 26 Gew.-%.

## Beispiele 5 und 6

### Herstellung weiterer Basislacke

Mit den Acrylatharzlösungen der Beispiele 2 und 3 wurden in gleicher Weise wie in Beispiel 4 Basislacke hergestellt.

## Beispiel 7

### Herstellung eines farbig pigmentierten Basislacks

Es wurden 230 g Acrylatlösung gemäß Beispiel 1, 18 g Phthalocyanin blau und 2 g Flammruß in einer Porzellankugelmühle bis zu einer Mahlfeinheit von 5 μm (Grindometer) angerieben. Nacheinander wurden unter Rühren 160 g einer 6%igen Dispersion eines Polyethylencopolymer-Wachses in n-Butylacetat, 130 g Acrylatlösung gemäß Beispiel 1, 236 g einer 55%igen Lösung eines teilbutanolveretherten, mittelreaktiven Melamin-Formaldehydharzes in n-Butanol, 2 g einer 10%igen Lösung eines Polymethylphenylsiloxans, 75 g Xylol und 117 g n-Butylacetat zugesetzt. 15 g einer 66%igen Aluminium-Paste in aliphatischem Dispergiermittel wurden in 15 g n-Butylacetat aufgeschlemmt. Diese Aufschlemmung wurde der obigen Mischung zugesetzt und gerührt. Der fertige Basislack hatte einen Festkörper von 33 Gew.-%, und wurde mit einem Gemisch aus 80 Teilen Butylacetat und 20 Teilen Butanol auf eine Auslaufzeit von 15 Sekunden im DIN-Becher 4 bei einem Festkörper von 27 Gew.-% zur Verarbeitung eingestellt.

## Beispiel 8

### Herstellung eines weiteren Basislacks

150 g einer 6%igen Dispersion eines modifizierten Polyethylenwachses in Butylacetat wurden vorgelegt. Es wurden unter Rühren 280 g Acrylatharzlösung des Beispiels 1, 45 g einer 15%igen Lösung eines Celluloseesters mit 50% Butyrat und 3% Acetat in Butylacetat, 240 g einer Lösung eines teilbutanolveretherten mittelreaktiven Melaminharzes (50%ig in n-Butanol), 2 g einer 10%igen Lösung eines Polyphenylmethylsiloxans in Xylol, 25 g n-Butylglycolacetat, 30 g Ethylglycolacetat und 55 g n-Butylacetat.

75 g einer 66%igen Paste eines oberflächenbehandelten Aluminium-Pulvers in hochsiedendem aliphatischen Lösungsmittel wurden in 98 g Butylacetat gründlich aufgeschlemmt und zur oben genannten Mischung zugegeben. Es resultierte ein Metallic-Basis-Lack mit einem Gewichtsfestkörper von 33,7% und einer Auslaufzeit von 24 Sekunden im DIN-Becher 4. Dieser Basislack wurde mit einem Lösungsmittelgemisch aus 20 Teilen n-Butanol und 80 Teilen n-Butylacetat auf eine Auslaufzeit von 15,5 Sekunden im DIN-Becher 4 eingestellt. Er hatte dann einen Festkörper von 26,5 Gew.-%.

## Beispiel 9

### Herstellung eines Klarlackes

Es werden 941 g eines Aromatengemisches mit einem Siedebereich von 156°C—172°C vorgelegt und auf 140°C erhitzt. Ein Gemisch aus 223 g Styrol, 223 g Methylmethacrylat, 208 g Butandiol-1,4-Monoacrylat, 30 g Acrylsäure, 803 g n-Butylacrylat und 18 g Di-tertiär-Butylperoxyd wurden innerhalb von 3 Stunden bei 140°C gleichmäßig zugegeben. Das Reaktionsgemisch wurde weitere 30 Minuten auf 140°C gehalten und dann wurde eine Lösung von 4 g Di-tertiär-Butylperoxyd in 50 g der Aromatenmischung mit dem Siedebereich zwischen 156—172°C zugegeben. Nach weiteren 2 Stunden bei 140°C resultierte eine Acrylatharzlösung mit einem Festkörpergehalt von 60,3%. Das Harz hatte eine Säurezahl von 14, eine OH-Zahl von 109 und eine Viskosität von 250 mPas (gemessen als 50%ige Lösung in Xylol mit dem ICI-Viskosimeter).

Nach bekanntem Verfahren wurde ein Melamin-Formaldehydkondensatharz hergestellt, in dem ein Gemisch von 630 Teilen Melamin und 2435 Teilen wäßriger Formaldehydlösung (mit 40 Vol.-% Formaldehyd) in Natronlauge auf einen pH-Wert von 7,0 eingestellt und solange auf 90°C erhitzt wurde, bis bei einer Probe nach Verdünnung mit Wasser auf das doppelte Volumen Harz ausfiel. Es wurden dann im Vakuum 1300 Teile Wasser abdestilliert und weiterhin 4000 Teile n-Butanol und 500 Teile konzentrierte Salzsäure zugegeben. Nachdem man die Mischung 30 Minuten auf 40°C gehalten hatte, wurde das veretherte Produkt mit 250 g Natriumcarbonat neutralisiert. Nach Abtrennen der butanolhaltigen Schicht wurde im Vakuum entwässert und durch Abdestillieren von Lösungsmittel ein Festkörpergehalt von 60% eingestellt.

Aus 50 Teilen der Acrylatharzlösung und 30 Teilen der Melaminharzlösung wurde zusammen mit 15 Teilen Xylol und 5 Teilen Butylacetat ein Klarlack hergestellt.

**0 052 776**

Beispiele 10 bis 14

Herstellung der Zweischicht-Metallic-Lackierungen

Zur Herstellung der Lackierungen wurden Stahlbleche vorbereitet, indem sie mit einer Eisenphosphatierung passiviert, dann mit einer üblichen Elektrotauchlackierung grundiert und eingebrannt und dann mit einem üblichen Einbrennfüller beschichtet und ebenfalls eingebrannt wurde.

Diese so vorbereiteten Bleche wurden jeweils mit einem Basislack der Beispiele 4 bis 8 beschichtet. Die Basislacke wurden mittels einer Spritzpistole mit 1,2 mm Düsenweite und einem Druck von 4 bar auf die Bleche aufgespritzt. Nach einer Ablüftzeit von 5 Minuten wurden die Basisschichten naß-in-naß mit dem Klarlack gemäß Beispiel 9 überspritzt. Nach einer Ablüftzeit von 15 Minuten wurden die Tafeln 30 Min. bei 130°C eingebrannt. Hierbei reagieren die Bindemittelbestandteile unter Vernetzung und es wurden Zweischicht-Metallic-Lackierungen erhalten, die einen hervorragenden metallischen Effekt zeigten.

**Patentansprüche**

1. Zweischicht-Metallic-Lackierung, bestehend aus einer Metallpigmente enthaltenden Basisschicht und einem Klarlacküberzug, wobei mindestens die Basisschicht aus einem Überzugsmittel erhalten wurde, das als filmbildendes Bindemittel ein Polymerisatharz enthält, das durch Copolymerisation von olefinisch ungesättigten Verbindungen erhalten wurde, dadurch gekennzeichnet, daß das Polymerisatharz durch Copolymerisation von

a) 1,0 bis 50,0 Gew.-% Acrylnitril und/oder Methacrylnitril,
b) 0,1 bis 10,0 Gew.-% einer Verbindung mit 2 oder mehr polymerisierbaren olefinischen Doppelbindungen und
c) 40,0 bis 98,9 Gew.-% anderen copolymerisierbaren Verbindungen erhalten wurde, wobei die Gesamtmenge der Bestandteile a, b und c 100 Gew.-% beträgt.

2. Zweischicht-Metallic-Lackierung nach Anspruch 1, dadurch gekennzeichnet, daß das Polymerisatharz durch Copolymerisation von

a) 3,0 bis 30,0 Gew.-% Acrylnitril und/oder Methacrylnitril,
b) 1,0 bis 7,0 Gew.-% einer Verbindung mit 2 oder mehr polymerisierbaren olefinischen Doppelbindungen und
c) 63,0 bis 96,0 Gew.-% anderen copolymerisierbaren Verbindungen erhalten wurde, wobei die Gesamtmenge der Bestandteile a, b und c 100 Gew.-% beträgt.

3. Zweischicht-Metallic-Lackierung nach Anspruch 1 oder 2 dadurch gekennzeichnet, daß als Bestandteil b Di-, Tri- oder Tetraacrylate von 2-, 3- bzw. 4wertigen Alkoholen verwendet werden.

4. Zweischicht-Metallic-Lackierung nach Anspruch 1 bis 3, dadurch gekennzeichnet, daß als Bestandteil c Verbindungen verwendet werden, die aus folgender Gruppe ausgewählt wurden: Acrylsäure, Methacrylsäure, Crotonsäure, Ester dieser Säuren, Amide dieser Säuren und deren Methylolderivate, Styrol und andere vinylgruppenhaltige Verbindungen.

5. Zweischicht-Metallic-Lackierung nach Anspruch 1 bis 4, dadurch gekennzeichnet, daß das Überzugsmittel für die Basisschicht zusätzlich zu den Bestandteilen a, b und c als Bestandteil d bis zu 5 Gew.-% eines Celluloseesters enthält, wobei die Gesamtmenge der Bestandteile a, b, c und d 100 Gew.-% beträgt.

6. Zweischicht-Metallic-Lackierung nach Anspruch 5, dadurch gekennzeichnet, daß als Celluloseester Celluloseacetobutyrat verwendet wird.

7. Zweischicht-Metallic-Lackierung nach Anspruch 1 bis 6, dadurch gekennzeichnet, daß das Polymerisatharz vernetzbare Hydroxylgruppen enthält.

8. Zweischicht-Metallic-Lackierung nach Anspruch 7, dadurch gekennzeichnet, daß das Überzugsmittel für die Basisschicht zusätzlich ein die Hydroxylgruppen vernetzendes Vernetzungsmittel enthält.

9. Zweischicht-Metallic-Lackierung nach Anspruch 8, dadurch gekennzeichnet, daß das Vernetzungsmittel ein Aminoplastharz, ein blockiertes Polyisocyanat und/oder ein Phenolplastharz ist.

10. Verfahren zur Herstellung einer Zweischicht-Metallic-Lackierung, bestehend aus einer Basisschicht und einem Klarlacküberzug, durch Aufbringen eines Metallpigmente enthaltenden Überzugsmittels und eines Klarlacks und anschließendes Einbrennen, dadurch gekennzeichnet, daß zur Herstellung des Bindemittels des Überzugsmittels für die Basisschicht die Strukturbausteine

| a) | 1,0 bis 50,0 Gew.-% | Acrylnitril und/oder Methacrylnitril, |
| b) | 0,1 bis 10,0 Gew.-% | einer Verbindung mit 2 oder mehr polymerisierbaren olefinischen Doppelbindungen und |
| c) | 40,0 bis 98,9 Gew.-% | anderer copolymerisierbarer Verbindungen copolymerisiert werden, wobei die Gesamtmenge der Bestandteile a, b und c 100 Gew.-% beträgt und das so erhaltene Polymerisatharz zusammen mit Metallpigmenten, organischen Lösungsmitteln, gegebenenfalls färbenden Pigmenten und bekannten Hilfsmitteln durch Dispergieren zu einem Überzugsmittel verarbeitet wird. |

11. Verfahren nach Anspruch 10, dadurch gekennzeichnet, daß das Polymerisatharz durch Copolymerisation von

| a) | 3,0 bis 30,0 Gew.-% | Acrylnitril und/oder Methacrylnitril, |
| b) | 1,0 bis 7,0 Gew.-% | einer Verbindung mit 2 oder mehr polymerisierbaren olefinischen Doppelbindungen und |
| c) | 63,0 bis 96,0 Gew.-% | anderen copolymerisierbaren Verbindungen erhalten wurde wobei die Gesamtmenge der Bestandteile a, b und c 100 Gew.-% beträgt. |

12. Verfahren nach Anspruch 10 oder 11, dadurch gekennzeichnet, daß als Bestandteil b Di-, Tri- oder Tetraacrylate von 2-, 3- bzw. 4wertigen Alkoholen verwendet werden.

13. Verfahren nach Anspruch 10 bis 12, dadurch gekennzeichnet, daß als Bestandteil c Verbindungen verwendet werden, die aus folgender Gruppe ausgewählt wurden: Acrylsäure, Methacrylsäure, Crotonsäure, Ester dieser Säuren, Amide dieser Säuren und deren Methylolderivate, Styrol und andere vinylgruppenhaltige Verbindungen.

14: Verfahren nach Anspruch 10 bis 13, dadurch gekennzeichnet, daß das Überzugsmittel für die Basisschicht zusätzlich zu den Bestandteilen a, b und c als Bestandteil d bis zu 5 Gew.-% eines Celluloseesters enthält, wobei die Gesamtmenge der Bestandteile a, b, c und d 100 Gew.-% beträgt.

15. Verfahren nach Anspruch 10 bis 14, dadurch gekennzeichnet, daß als Celluloseester Celluloseacetobutyrat verwendet wird.

16. Verfahren nach Anspruch 10 bis 15, dadurch gekennzeichnet, daß das Polymerisatharz vernetzbare Hydroxylgruppen enthält.

17. Verfahren nach Anspruch 16, dadurch gekennzeichnet, daß das Überzugsmittel für die Basisschicht zusätzlich ein die Hydroxylgruppen vernetzendes Vernetzungsmittel enthält.

18. Verfahren nach Anspruch 17, dadurch gekennzeichnet, daß das Vernetzungsmittel ein Aminoplastharz, ein blockiertes Polyisocyanat und/oder ein Phenoplastharz ist.

19. Verfahren nach Anspruch 16, dadurch gekennzeichnet, daß dem Überzugsmittel für die Basisschicht vor oder während des Aufbringens ein Polyisocyanat beigemischt wird.

20. Verfahren nach Anspruch 10 bis 19, dadurch gekennzeichnet, daß zunächst das Überzugsmittel für die Basisschicht und dann der Klarlacküberzug naß-in-naß aufgebracht und beide Schichten gemeinsam eingebrannt werden.

21. Verwendung eines Metallpigmente enthaltenden Überzugsmittels, das als filmbildendes Bindemittel ein Polymerisatharz enthält, das durch Copolymerisation von olefinisch ungesättigten Verbindung erhalten wurde, für die Basisschicht einer Zweischicht-Metallic-Lackierung, die als obere Deckschicht einen Klarlacküberzug aufweist, dadurch gekennzeichnet, daß das Polymerisatharz durch Copolymerisation von

| a) | 1,0 bis 50,0 Gew.-% | Acrylnitril und/oder Methacrylnitril, |
| b) | 0,1 bis 10,0 Gew.-% | einer Verbindung mit 2 oder mehr polymerisierbaren olefinischen Doppelbindungen und |
| c) | 40,0 bis 98,9 Gew.-% | anderen copolymerisierbaren Verbindungen erhalten wurde, wobei die Gesamtmenge der Bestandteile a, b und c 100 Gew.-% beträgt. |

22. Verwendung nach Anspruch 21, dadurch gekennzeichnet, daß das Polymerisatharz durch Copolymerisation von

| a) | 3,0 bis 30,0 Gew.-% | Acrylnitril und/oder Methacrylnitril, |
| b) | 1,0 bis 7,0 Gew.-% | einer Verbindung mit 2 oder mehr polymerisierbaren olefinischen Doppelbindungen und |
| c) | 63,0 bis 96,0 Gew.-% | anderen copolymerisierbaren Verbindungen erhalten wurde, wobei die Gesamtmenge der Bestandteile a, b und c 100 Gew.-% beträgt. |

23. Verwendung nach Anspruch 21 oder 22, dadurch gekennzeichnet, daß als Bestandteil b Di-, Tri- oder Tetraacrylate von 2-, 3- bzw. 4wertigen Alkoholen verwendet werden.

24. Verwendung nach Anspruch 21 bis 23, dadurch gekennzeichnet, daß als Bestandteil c Verbindungen verwendet werden, die aus folgender Gruppe ausgewählt wurden: Acrylsäure, Methacrylsäure, Crotonsäure, Ester dieser Säuren, Amide dieser Säuren und deren Methylolderivate, Styrol und andere vinylgruppenhaltige Verbindungen.

25. Verwendung nach Anspruch 21 bis 24, dadurch gekennzeichnet, daß das Überzugsmittel für die Basisschicht zusätzlich zu den Bestandteilen a, b und c als Bestandteil d bis zu 5 Gew.-% eines Celluloseesters enthält, wobei die Gesamtmenge der Bestandteile a, b, c und d 100 Gew.-% beträgt.

26. Verwendung nach Anspruch 21 bis 25, dadurch gekennzeichnet, daß als Celluloseester Celluloseacetobutyrat verwendet wird.

27. Verwendung nach Anspruch 21 bis 26, dadurch gekennzeichnet, daß das Polymerisatharz vernetzbare Hydroxylgruppen enthält.

28. Verwendung nach Anspruch 21 bis 27, dadurch gekennzeichnet, daß das Überzugsmittel für die Basisschicht zusätzlich ein die Hydroxylgruppen vernetzendes Vernetzungsmittel enthält.

29. Verwendung nach Anspruch 21 bis 28, dadurch gekennzeichnet, daß das Vernetzungsmittel ein Aminoplastharz, ein blockiertes Polyisocyanat und/oder ein Phenoplastharz ist.

## Claims

1. A two-layer metal-effect coating, composed of a base layer which contains metal pigments and of a clear to coating, at least the base layer being obtained from a coating agent which contains as the film-forming binder a polymer resin which was obtained by copolymerizing olefinically unsaturated compounds, wherein the polymer resin is obtained by copolymerizing

   a) 1.0 to 50.0% by weight of acrylonitrile and/or methacrylonitrile,
   b) 0.1 to 10.0% by weight of a compound having 2 or more polymerizable olefinic double bonds and
   c) 40.0 to 98.9% by weight of other copolymerizable compounds, with the total amount of the components a, b and c being 100% by weight.

2. A two-layer metal-effect coating as claimed in claim 1, wherein the polymer resin is obtained by copolymerizing:

   a) 3.0 to 30.0% by weight of acrylonitrile and/or methacrylonitrile,
   b) 1.0 to 7.0% by weight of a compound having 2 or more polymerizable olefinic double bonds and
   c) 63.0 to 96.0% by weight of other copolymerizable compounds, with the total amount of the components a, b and c being 100% by weight.

3. A two-layer metal-effect coating as claimed in claim 1 or 2, wherein diacrylates, triacrylates or tetraacrylates of 2-, 3- or 4-hydric alcohols are used as component b.

4. A two-layer metal-effect coating as claimed in claim 1 to 3, wherein compounds are used as component c which are select from the following group: acrylic acid, methacrylic acid, crotonic acid, esters of these acids, amides of these acids and their methylol derivatives, styrene and other compounds containing vinyl groups.

5. A two-layer metal-effect coating as claimed in claim 1 to 4, wherein the coating agent for the base layer contains, in addition to the components a, b and c, up to 5% by weight of a cellulose ester as component d, with the total amount of the components a, b, c and d being 100% by weight.

6. A two-layer metal-effect coating as claimed in claim 5, wherein cellulose acetobutyrate is used as the cellulose ester.

7. A two-layer metal-effect coating as claimed in claim 1 to 6, wherein the polymer resin contains crosslinkable hydroxyl groups.

8. A two-layer metal-effect coating as claimed in claim 7, wherein the coating agent for the base layer also contains a crosslinking agent which crosslinks the hydroxyl groups.

9. A two-layer metal-effect coating as claimed in claim 8, wherein the crosslinking agent is an aminoplast resin, a blocked polyisocyanate and/or a phenoplast resin.

10. A process for the production of a two-layer metal-effect coating, composed of a base layer and a clear top coating, by application of a coating agent which contains metal pigments and of a clear coating, and by subsequent stoving, which process comprises copolymerizing the structural building blocks

   a) 1.0 to 50.0% by weight of acrylonitrile and/or methacrylonitrile,
   b) 0.1 to 10.0% by weight of a compound having 2 or more polymerizable olefinic double bonds and
   c) 40.0 to 98.9% by weight of other copolymerizable compounds, with the total amount of the components a, b and c being 100% by weight, in order to prepare the binder for the coating agent of the base layer, and processing the polymer resin thus obtained together with metal pigments, organic solvents and, if appropriate, coloring pigments and known auxiliary agents into a coating agent by dispersing.

11. A process as claimed in claim 10, wherein the polymer resin was obtained by copolymerizing

a) 3.0 to 30.0% by weight of acrylonitrile and/or methacrylonitrile,
b) 1.0 to 7.0% by weight of a compound having 2 or more polymerizable olefinic double bonds and
c) 63.0 to 96.0% by weight of other copolymerizable compounds, with the total amount of the components a, b and c being 100% by weight.

12. A process as claimed in claim 10 or 11, wherein diacrylates, triacrylates or tetraacrylates of 2-, 3- or 4-hydric alcohols are used as component b.

13. A process as claimed in claim 10 to 12, wherein compounds are used as component c which are selected from the following group: acrylic acid, methacrylic acid, crotonic acid, esters of these acids, amides of these acids and their methylol derivatives, styrene and other compounds containing vinyl groups.

14. A process as claimed in claim 10 to 13, wherein the coating agent for the base layer contains, in addition to the components a, b and c, up to 5% by weight of a cellulose ester as component d, with the total amount of the components a, b, c and d being 100% by weight.

15. A process as claimed in claim 10 to 14, wherein cellulose acetobutyrate is used as the cellulose ester.

16. A process as claimed in claim 10 to 15, wherein the polymer resin contains crosslinkable hydroxyl groups.

17. A process as claimed in claim 16, wherein the coating agent for the base layer also contains a crosslinking agent which crosslinks the hydroxyl groups.

18. A process as claimed in claim 17, wherein the crosslinking agent is an aminoplast resin, a blocked polyisocyanate and/or a phenoplast resin.

19. A process as claimed in claim 16, wherein a polyisocyanate is admixed to the coating agent for the base layer, prior to or during application.

20. A process as claimed in claim 10 to 19, wherein the coating agent for the base layer is first applied and thereafter the clear top coating wet-on-wet and the two layers are stoved together.

21. The use of a metal pigment-containing coating agent, which contains as the film-forming binder a polymer resin which was obtained by copolymerizing olefinically unsaturated compounds, for the base layer of a two-layer metal-effect coating which has a clear top coating as the top finish, wherein the polymer resin is obtained by copolymerizing

a) 1.0 to 50.0% by weight of acrylonitrile and/or methacrylonitrile,
b) 0.1 to 10.0% by weight of a compound having 2 or more polymerizable olefinic double bonds and
c) 40.0 to 98.9% by weight of other copolymerizable compounds, with the total amount of the components a, b and c being 100% by weight.

22. The use as claimed in claim 21, wherein the polymer resin was obtained by copolymerizing

a) 3.0 to 30.0% by weight of acrylonitrile and/or methacrylonitrile,
b) 1.0 to 7.0% by weight of a compound having 2 or more polymerizable olefinic double bonds and
c) 63.0 to 96.0% by weight of other copolymerizable compounds, with the total amount of the components a, b and c being 100% by weight.

23. The use as claimed in claim 21 or 22, wherein diacrylates, triacrylates or tetraacrylates of 2-, 3- or 4-hydric alcohols are used as component b.

24. The use as claimed in claim 21 to 23, wherein compounds are used as component c which are selected from the following group: acrylic acid, methacrylic acid, crotonic acid, esters of these acids, amides of these acids and their methylol derivatives, styrene and other compounds containing vinyl groups.

25. The use as claimed in claim 21 to 24, wherein the coating agent for the base layer contains, in addition to the components a, b and c, up to 5% by weight of a cellulose ester as component d, with the total amount of the components a, b, c and d being 100% by weight.

26. The use as claimed in claim 21 to 25, wherein cellulose acetobutyrate is used as the cellulose ester.

27. The use as claimed in claim 21 to 26, wherein the polymer resin contains crosslinkable hydroxyl groups.

28. The use as claimed in claim 21 to 27, wherein the coating agent for the base layer also contains a crosslinking agent which crosslinks the hydroxyl groups.

29. The use as claimed in claim 21 to 28, wherein the crosslinking agent is an aminoplast resin, a blocked polyisocyanate and/or a phenoplast resin.

## Revendications

1. Peinture métallisée en deux couches comprenant une couche de base contenant des pigments métalliques et un revêtement de vernis transparent, au moins la couche de base ayant été obtenue en partant d'un agent de revêtement qui contient comme liant filmogène une résine de produit de polymérisation que l'on a obtenue par copolymérisation de composés à insaturation oléfinique, caractérisée par le fait que la résine de produit de polymérisation a été obtenue par copolymérisation de:

    a)   1,0 à 50,0% en poids d'acrylonitrile et/ou de méthacrylonitrile,
    b)   0,1 à 10,0% en poids d'un composé contenant 2 ou plusieurs doubles liaisons oléfiniques polymérisables et
    c)   40,0 à 98,9% d'autres composés copolymérisables, la quantité totale des constituants a, b et c étant de 100% en poids.

2. Peinture métallisée à deux couches selon la revendication 1, caractérisée par le fait que la résine de produit de polymérisation a été obtenue par copolymérisation de:

    a)   3,0 à 30,0% en poids d'acrylonitrile et/ou de méthacrylonitrile,
    b)   1,0 à 7,0% en poids d'un composé contenant 2 ou plusieurs doubles liaisons oléfiniques polymérisables et
    c)   63,0 à 96,0% en poids d'autres composés copolymérisables, la quantité totale des constituants a, b et c étant de 100% en poids.

3. Peinture métallisée en deux couches selon l'une des revendications 1 et 2, caractérisée par le fait que, comme constituant b, on utilise des di-, tri- ou tétraacrylates d'alcools di-, tri- ou tétrafonctionnels.

4. Peinture métallisée en deux couches selon les revendications 1 à 3, caractérisée par le fait que comme, constituant c, on utilise des composés qui ont été choisis dans le groupe suivant : l'acide acrylique, l'acide méthacrylique, l'acide crotonique, les esters de ces acides, les amides de ces acides et leurs dérivés méthylolés, le styrène et d'autres composés contenant des groupes vinyle.

5. Peinture métallisée en deux couches selon les revendications 1 à 4, caractérisée par le fait que l'agent de revêtement destiné à la couche de base contient, en plus des constituants a, b et c, comme constituant d, jusqu'à 5% en poids d'un ester de cellulose, la quantité totale des constituants a, b, c et de étant de 100% en poids.

6. Peinture métallisée en deux couches selon la revendication 5, caractérisée par le fait que, comme ester de cellulose, on utilise l'acétobutyrate de cellulose.

7. Peinture métallisée en deux couches selon les revendications 1 à 6, caractérisée par le fait que la résine de produit de polymérisation contient des groupes hydroxyle réticulables.

8. Peinture métallisée en deux couches selon la revendication 7, caractérisée par le fait que l'agent de revêtement destiné à la couche de base contient en outre un agent de réticulation réticulant les groupes hydroxyle.

9. Peinture métallisée en deux couches selon la revendication 8, caractérisée par le fait que l'agent de réticulation est une résine aminoplaste, un polyisocyanate bloqué et/ou une résine phénoplaste.

10. Procédé de réalisation d'une peinture métallisée en deux couches comprenant une couche de base et un revêtement de vernis transparent, par application d'un agent de revêtement contenant des pigments métalliques et d'un vernis transparent et ensuite cuisson, caractérisé par le fait que, pour la préparation du liant de l'agent de revêtement destiné à la couche de base, on copolymérise les constituants structuraux suivants:

    a)   1,0 à 50,0% en poids d'acrylonitrile et/ou de méthacrylonitrile,
    b)   0,1 à 10,0% en poids d'un composé contenant 2 ou plusieurs doubles liaisons oléfiniques polymérisables et
    c)   40,0 à 98,9% en poids d'autres composés copolymérisables, la quantité totale des constituants a, b et c étant de 100% en poids, et que l'on transforme la résine de produit de polymérisation ainsi obtenue en un agent de revêtement, par dispersion, en même temps que des pigments mécaniques, des solvants organiques, éventuellement des pigments colorants et des adjuvants connus.

11. Procédé selon la revendication 10, caractérisée par le fait que la résine de produit de polymérisation a été obtenue par copolymérisation de:

a) 3,0 à 30,0% en poids d'acrylonitrile et/ou de méthacrylonitrile,
b) 1,0 à 7,0% en poids d'un composé contenant 2 ou plusieurs doubles liaisons oléfiniques polymérisables et
c) 63,0 à 96,0% en poids d'autres composés copolymérisables, la quantité totale des constituants a, b et c étant de 100% en poids.

12. Procédé selon la revendications 10 et 11, caractérisé par le fait que, comme constituant b, on utilise des di-, tri- ou tétraacrylates d'alcools di-, tri- ou tétrafonctionnels.

13. Procédé selon la revendications 10 à 12, caractérisé par le fait que, comme constituant c, on utilise des composés qui ont été choisis dans le groupe suivant: l'acide acrylique, l'acide méthacrylique, l'acide crotonique, les esters de ces acides, les amides de ces acides et leurs dérivés méthylolés, le styrène et d'autres composés contenant des groupes vinyle.

14. Procédé selon les revendications 10 à 13, caractérisé par le fait que l'agent de revêtement destiné à la couche de base contient, en plus des constituants a, b et c, comme constituant d, jusqu'à 5% en poids d'un ester de cellulose, la quantité totale des constituants a, b, c et détant de 100% en poids.

15. Procédé selon les revendications 10 à 14, caractérisé par le fait que, comme ester de cellulose, on utilise l'acétobutyrate de cellulose.

16. Procédé selon les revendications 10 à 15, caractérisé par le fait que la résine de produit de polymérisation contient des groupes hydroxyle réticulables.

17. Procédé selon la revendication 16, caractérisé par le fait que l'agent de revêtement destiné à la couche de base contient en outre un agent de réticulation réticulant les groupes hydroxyle.

18. Procédé selon la revendication 17, caractérisé par le fait que l'agent de réticulation est une résine aminoplaste, un polyisocyanate bloqué et/ou une résine phénoplaste.

19. Procédé selon la revendication 16, caractérisé par le fait que l'on mélange à l'agent de revêtement destiné à la couche de base, avant ou pendant l'application, un polyisocyanate.

20. Procédé selon les revendications 10 à 19, caractérisé par le fait que l'on applique tout d'abord l'agent de revêtement destiné à la couche de base et ensuite le revêtement de vernis transparent, humide sur humide, et que l'on cuit les deux couches conjointement.

21. Utilisation d'un agent de revêtement contenant des pigments métalliques, qui contient comme liant filmogène une résine de produit de polymérisation que l'on a obtenue par copolymérisation de composés à insaturation olefinique, pour la couche de base d'une peinture métallisée en deux couches, qui présente, comme couche supérieure de finition, un revêtement de vernis transparent, caractérisée par le fait que la résine de produit de polymérisation a été obtenue par copolymérisation de:

a) 1,0 à 50,0% en poids d'acrylonitrile et/ou de méthacrylonitrile,
b) 0,1 à 10,0% en poids d'un composé contenant 2 ou plusieurs doubles liaisons oléfiniques polymérisables et
c) 40,0 à 98,9% en poids d'autres composés copolymérisables, la quantité totale des constituants a, b et c étant de 100% en poids.

22. Utilisation selon la revendication 21, caractérisée par le fait que la résine de produit de polymérisation a été obtenue par copolymérisation de:

a) 3,0 à 30,0% en poids d'acrylonitrile et/ou de méthacrylonitrile,
b) 1,0 à 7,0% en poids d'un composé contenant 2 ou plusieurs doubles liaisons oléfiniques polymérisables et
c) 63,0 à 96,0% en poids d'autres composés copolymérisables, la quantité totale des constituants a, b et c étant de 100% en poids.

23. Utilisation selon l'une des revendications 21 et 22, caractérisée par le fait que, comme constituant b, on utilise des di-, tri- ou tétraacrylates d'alcools di-, tri- ou tétrafonctionnels.

24. Utilisation selon les revendications 21 à 23, caractérisée par le fait que, comme constituant c, on utilise des composés qui ont été choisis dans le groupe suivant: l'acide acrylique, l'acide méthacrylique, l'acide crotonique, les esters de ces acides, les amides de ces acides et leurs dérivés méthylolés, le styrène et d'autres composés contenant des groupes vinyle.

25. Utilisation selon les revendications 21 à 24, caractérisée par le fait que l'agent de revêtement destiné à la couche de base contient, en plus des constituants a, b et c, comme constituant d, jusqu'à 5% en poids d'un ester de cellulose, la quantité totale des constituants a, b, c et d étant de 100% en poids.

0 052 776

26. Utilisation selon les revendications 21 à 25, caractérisée par le fait que, comme ester de cellulose, on utilise l'acétobutyrate de cellulose.

27. Utilisation selon les revendications 21 à 26, caractérisée par le fait que la résine de produit de polymérisation contient des groupes hydroxyle réticulables.

28. Utilisation selon les revendications 21 à 27, caractérisée par le fait que l'agent de revêtement destiné à la couche de base contient en outre un agent de réticulation réticulant les groupes hydroxyle.

29. Utilisation selon les revendications 21 à 28, caractérisée par le fait que l'agent de réticulation est une résine aminoplaste, un polyisocyanate bloqué et/ou une résine phénoplaste.

13